# EUROPEAN PATENT SPECIFICATION

(11) **EP 3 822 326 B1**
(45) Date of publication and mention of the grant of the patent: **28.08.2024**
(21) Application number: 18925784.3
(22) Date of filing: 10.07.2018
(51) Int. Cl.: C09D 201/00, C09D 7/61, C09D 7/65, C08K 7/26, C01B 33/158

(54) **METHOD FOR PRODUCING COATING LIQUID, COATING LIQUID, AND COATING FILM**
VERFAHREN ZUR HERSTELLUNG EINER BESCHICHTUNGSFLÜSSIGKEIT, BESCHICHTUNGSFLÜSSIGKEIT UND BESCHICHTUNGSFILM
PROCÉDÉ DE PRODUCTION DE LIQUIDE DE REVÊTEMENT, LIQUIDE DE REVÊTEMENT ET FILM DE REVÊTEMENT

(43) Date of publication of application: 19.05.2021
(73) Proprietor: Resonac Corporation, Tokyo 105-7325 (JP)
(72) Inventor: IZUMI, Hiroyuki, Tokyo 105-8518 (JP); MAKINO, Tatsuya, Tokyo 105-8518 (JP); KOTAKE, Tomohiko, Tokyo 105-8518 (JP); TAKAYASU, Satoshi, Tokyo 105-8518 (JP); SATO, Naoyoshi, Tokyo 105-8518 (JP)
(74) Representative: Berggren Oy
(86) International application number: PCT/JP2018/026016
(87) International publication number: WO 2020/012554

(56) References cited:
- JP-A- 2004 534 108
- JP-A- 2005 525 454
- JP-A- 2006 504 543
- JP-A- 2006 515 556
- JP-A- 2007 514 810
- JP-A- 2016 109 943
- JP-A- 2017 031 386
- JP-A- 2017 194 632
- JP-A- 2017 194 632
- JP-A- H10 508 049
- JP-A- H11 513 431
- US-A1- 2017 349 763

## Description

### Technical Field

The present invention relates to a method for producing a coating liquid, a coating liquid, and a coating film.

### Background Art

Methods of using porous particles as a constituent material for thermal insulation materials have been proposed (for example, Patent Literature 1). In Patent Literature 1, it has been proposed to use porous particles (particulate aerogel) as a filler material between the resin plates and the like constituting a thermal insulation window.

Patent Literature 2 relates to a thermal barrier coating and discloses a composition comprising hollow silica particles, which is prepared using a planetary mixer.

### Citation List

### Patent Literature

Patent Literature 1: Japanese Unexamined Patent Publication No. 2012-91943
Patent Literature 2: JP 2017 19463

### Summary of Invention

### Technical Problem

In a case in which porous particles are handled in the form of particles as a filler, constituents other than porous particles as described above are indispensable. On the other hand, if it is possible to form a layer of porous particles directly on the surface of an object, the configuration can be made simpler, and at the time of forming the layer, the layer is not likely to be restricted by the surface shape of the object.

The present invention was achieved in view of the above-described circumstances, and it is an object of the invention to provide a novel method for producing a porous particle-containing coating liquid. It is another object of the present invention to provide a coating liquid obtainable by this production method, and a coating film obtainable by using this coating liquid.

### Solution to Problem

The present invention provides a method for producing a coating liquid, the method comprising a stirring step of stirring a raw material comprising porous particles, a binder resin, and a liquid medium using a planetary mixer. In the coating liquid obtainable by the production method of the present invention, a large quantity of porous particles as compared to conventional cases exist in a dispersed state. Therefore, a coating film comprising porous particles densely can be formed on the surface of an object.

The production method of the present invention may also comprise a preliminary stirring step of stirring the raw material using a high-speed shear stirrer, prior to the stirring step. Thereby, it becomes easy to uniformly mix the porous particles into the liquid medium.

According to the production method of the present invention, the liquid medium can comprise water. Furthermore, this liquid medium can further comprise an organic solvent.

With regard to the production method of the present invention, the binder resin can comprise at least one selected from the group consisting of an epoxy resin, a silicone resin, a phenolic resin, a urea resin, a melamine resin, a polyurethane resin, a polyethylene resin, a polypropylene resin, a polystyrene resin, a polyester resin, an acrylic resin, a polyvinyl chloride resin, a polyvinyl acetate resin, a polyamide resin, a polyimide resin, a cellulose-based resin, and a polyvinyl-based resin. Thereby, the film-forming properties can be further enhanced.

With regard to the production method of the present invention, the porous particles may be aerogel particles.

The present invention also provides a coating liquid obtainable by the above-described production method of the present invention. Specifically, the present invention provides a coating liquid comprising porous particles, a binder resin, and a liquid medium, in which a content of the porous particles is 20% by mass or more. In the coating liquid of the present invention, a large quantity of porous particles as compared to conventional cases exist in a dispersed state. Therefore, a coating film comprising the porous particles densely can be formed on the surface of an object. One factor by which a large quantity of porous particles can be dispersed in the coating liquid may be appropriate adjustment of the dispersing method.

With regard to the coating liquid of the present invention, the liquid medium can comprise water. Furthermore, this liquid medium can further comprise an organic solvent.

With regard to the coating liquid of the present invention, the binder resin can comprise at least one selected from the group consisting of an epoxy resin, a silicone resin, a phenolic resin, a urea resin, a melamine resin, a polyurethane resin, a polyethylene resin, a polypropylene resin, a polystyrene resin, a polyester resin, an acrylic resin, a polyvinyl chloride resin, a polyvinyl acetate resin, a polyamide resin, a polyimide resin, a cellulose-based resin, and a polyvinyl-based resin. Thereby, the film-forming properties can be further enhanced.

The specific gravity of the coating liquid of the present invention can be adjusted to 0.8 or less.

The present invention also provides a coating film comprising porous particles and a binder resin, in which a content of the porous particles is 80% by mass or more, and the coating film has a density of 0.4 g/cm³ or less. Conventionally, it has been very difficult to obtain a light coating film in which porous particles are highly packed as such (porous coating film); however, it is now possible to realize this by using the above-described coating liquid of the present invention.

With regard to the coating film of the present invention, the binder resin can comprise at least one selected from the group consisting of an epoxy resin, a silicone resin, a phenolic resin, a urea resin, a melamine resin, a polyurethane resin, a polyethylene resin, a polypropylene resin, a polystyrene resin, a polyester resin, an acrylic resin, a polyvinyl chloride resin, a polyvinyl acetate resin, a polyamide resin, a polyimide resin, a cellulose-based resin, and a polyvinyl-based resin. Thereby, the film quality can be further enhanced.

### Advantageous Effects of Invention

According to the present invention, a novel method for producing a porous particle-containing coating liquid can be provided. Furthermore, according to the present invention, a coating liquid obtainable by this production method, and a coating film (porous coating film) obtainable by using this coating liquid can be provided.

### Description of Embodiments

In the following description, suitable embodiments of the present invention will be described in detail. However, the present invention is not intended to be limited to the following embodiments. In the present specification, a numerical value range described using "to" represents a range including the numerical values described before and after "to" as the minimum value and the maximum value, respectively. The expression "A or B" implies that any one of A and B may be included, or both of them may be included. Unless particularly stated otherwise, the materials listed as examples in the present embodiments can be used singly or in combination of two or more kinds thereof.

### <Porous particles>

Examples of the porous particles include inorganic porous particles and organic porous particles.

Examples of the constituent material of the inorganic porous particles include metal oxides (including composite oxides), hydroxides, nitrides, carbides, carbonates, borates, sulfates, silicates, and phosphates. Specifically, examples include metal oxides such as silica, titanium oxide, zinc oxide, alumina, zirconium oxide, tin oxide, magnesium oxide, and potassium titanate; hydroxides such as aluminum hydroxide, magnesium hydroxide, and calcium hydroxide; nitrides such as silicon nitride, titanium nitride, and aluminum nitride; carbides such as silicon carbide and titanium carbide; carbonates such as calcium carbonate and magnesium carbonate; borates such as aluminum borate and magnesium borate; sulfates such as calcium sulfate and magnesium sulfate; silicates such as calcium silicate and magnesium silicate; and phosphates such as calcium phosphate. In addition to those, glass, zeolite, aerogel, and the like may also be used as the above-described constituent material.

Examples of the constituent material of the organic porous particles include charcoal, activated carbon, a polymer porous sintered body, a resin foam, and a silicone porous body.

Regarding the porous particles, one kind thereof may be used alone, or two or more kinds thereof may be used in combination.

The specific surface area of the porous particles can be adjusted to 1200 m²/g or less; however, the specific surface area may be 1000 m²/g or less, may be 900 m²/g or less, or may be 800 m²/g or less. Thereby, a coating liquid having excellent film-forming properties is easily prepared. The lower limit of the specific surface area of the porous particles is not particularly limited; however, from the viewpoint of suppressing aggregation in the coating liquid and enhancing the packing ratio, the specific surface area can be adjusted to about 30 m²/g.

The specific surface area can be measured by the BET method. As the measuring apparatus, a gas adsorption amount measuring apparatus (manufactured by Quantachrome Instruments Japan G.K., autosorb-iQ (autosorb is a registered trademark)) can be used.

The average particle size D50 of the porous particles can be adjusted to 1 to 1000 µm; however, the average particle size may be 3 to 700 µm, may be 5 to 500 µm, may be 10 to 100 µm, or may be 10 to 50 µm. When the average particle size D50 of the porous particles is 1 µm or more, porous particles having excellent dispersibility, handleability, and the like are easily obtained. On the other hand, when the average particle size D50 is 1000 µm or less, porous particles having excellent dispersibility are easily obtained. The average particle size of the porous particles can be appropriately adjusted by a pulverization method, pulverization conditions, sieving, a classification method, and the like.

The average particle size D50 of the porous particles can be measured by a laser diffraction and scattering method. For example, porous particles are added to a solvent (ethanol) such that the content of the porous particles reaches 0.05% to 5% by mass, and dispersing of the porous particles is performed by vibrating the mixture with a 50-W ultrasonic homogenizer for 15 to 30 minutes. Subsequently, about 10 mL of the dispersion liquid is injected into a laser diffraction and scattering type particle size distribution measuring apparatus, and the particle size is measured at 25°C at a refractive index of 1.3 and an absorption of 0. Then, the particle size at a cumulative value of 50% (on a volume basis) in this particle size distribution is designated as average particle size D50. As the measuring apparatus, for example, Microtrac MT3000 (manufactured by NIKKISO CO., LTD., product name) can be used.

Hereinafter, aerogel particles will be described as an example of the porous particles; however, the porous particles are not limited to the following embodiment.

### (Aerogel particles)

In a narrow sense, a dried gel obtained by using a supercritical drying method for a wet gel is referred to as aerogel, a dried gel obtained by drying a wet gel under atmospheric pressure is referred to as xerogel, and a dried gel obtained by freeze-drying is referred to as cryogel; however, in the present embodiment, a low-density dried gel obtained regardless of these drying techniques for wet gel will be referred to as "aerogel". That is, in the present embodiment, the "aerogel" means "Gel comprised of a microporous solid in which the dispersed phase is a gas", which is an aerogel in a broad sense. Generally, the inner portion of the aerogel has a reticulate microstructure and has a cluster structure in which aerogel components in the form of particles having a size of about 2 to 20 nm are bound. Between the skeletons formed by these clusters, there are pores having a size of less than 100 nm. Thereby, a three-dimensionally fine porous structure is formed in the aerogel. The aerogel according to the present embodiment is, for example, a silica aerogel containing silica as a main component. As the silica aerogel, for example, a so-called organic-inorganic hybridized silica aerogel in which an organic group (a methyl group or the like) or an organic chain has been introduced, may be mentioned.

The aerogel particles according to the present embodiment are not particularly limited, and aerogel particles produced by various known production methods can be used. As an example, the aerogel that can constitute the aerogel particles of the present embodiment will be described. As will be described below, this aerogel is a dried product of a wet gel (a product obtainable by drying a wet gel produced from a sol: a dried product of a sol-derived wet gel), which is a condensate of a sol containing at least one selected from the group consisting of a silicon compound having a hydrolysable functional group or a condensable functional group, and a hydrolysis product of a silicon compound having a hydrolysable functional group.

The aerogel according to the present embodiment can have a structure represented by the following General Formula (1). The aerogel according to the present embodiment can have a structure represented by the following General Formula (1a) as a structure comprising the structure represented by Formula (1).

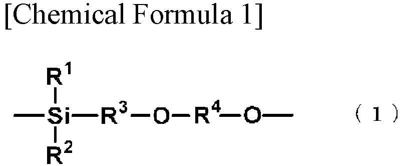

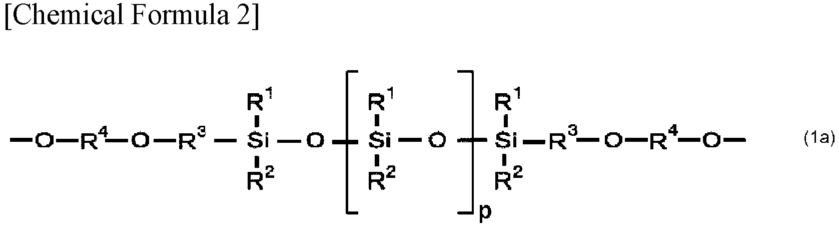

In Formula (1) and Formula (1a), R¹ and R² each independently represent an alkyl group or an aryl group; and R³ and R⁴ each independently represent an alkylene group. Here, examples of the aryl group include a phenyl group and a substituted phenyl group. Meanwhile, examples of a substituent for the substituted phenyl group include an alkyl group, a vinyl group, a mercapto group, an amino group, a nitro group, and a cyano group. "p" represents an integer from 1 to 50. In Formula (1a), two or more R¹'s may be respectively identical or different, and similarly, two or more R²'s may be respectively identical or different. In Formula (1a), two R³'s may be respectively identical or different, and similarly, two R⁴'s may be respectively identical or different.

By introducing a structure represented by the above-described Formula (1) or Formula (1a) into the skeleton of an aerogel as an aerogel component, a flexible aerogel having a low thermal conductivity is obtained. From this point of view, in Formula (1) and Formula (1a), R¹ and R² each independently represent an alkyl group having 1 to 6 carbon atoms, a phenyl group, or the like, and examples of this alkyl group include a methyl group. Furthermore, in Formula (1) and Formula (1a), R³ and R⁴ each independently represent an alkylene group having 1 to 6 carbon atoms or the like, and examples of this alkylene group include an ethylene group and a propylene group. In Formula (1a), "p" can be set to 2 to 30 and may also be 5 to 20.

The aerogel according to the present embodiment can have a ladder-type structure comprising struts and bridges, and the bridges can have a structure represented by the following General Formula (2). By introducing such a ladder-type structure into the skeleton of the aerogel as the aerogel component, heat resistance and mechanical strength can be enhanced. The "ladder-type structure" according to the present embodiment is a structure having two struts and bridges connecting the struts (having a so-called "ladder" form). According to the present embodiment, the skeleton of the aerogel may have a ladder-type structure; however, it is also acceptable that the aerogel partially has a ladder-type structure.

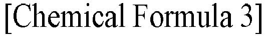

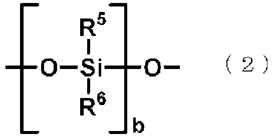

In Formula (2), R⁵ and R⁶ each independently represent an alkyl group or an aryl group; and "b" represents an integer from 1 to 50. Here, examples of the aryl group include a phenyl group and a substituted phenyl group. Furthermore, examples of a substituent for the substituted phenyl group include an alkyl group, a vinyl group, a mercapto group, an amino group, a nitro group, and a cyano group. In Formula (2), when "b" represents an integer of 2 or greater, two or more R⁵'s may be respectively identical or different, and similarly, two or more R⁶'s may also be respectively identical or different.

By introducing the above-described structure into the skeleton of the aerogel as the aerogel component, an aerogel having superior flexibility compared to, for example, conventional aerogels having a structure derived from a ladder-type silsesquioxane (that is, having a structure represented by the following General Formula (X)) is formed. Silsesquioxane is a polysiloxane having a composition formula: (RSiO_{1.5})ₙ and can have various skeletal structures such as a basket type, a ladder type, and a random type. As shown by the following General Formula (X), in a conventional aerogel having a structure derived from a ladder-type silsesquioxane, the structure of the bridge is -O-; however, in the aerogel according to the present embodiment, the structure of the bridge is the structure represented by the above-described General Formula (2) (polysiloxane structure). However, the aerogel of the present embodiment may further have a structure derived from silsesquioxane in addition to the structure represented by General Formula (2).

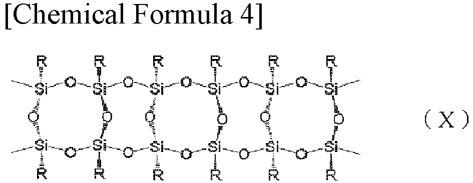

In Formula (X), R represents a hydroxy group, an alkyl group, or an aryl group.

The structure constituting the struts and the chain length thereof, and the spacing of the structure constituting the bridges are not particularly limited; however, from the viewpoint of further enhancing heat resistance and mechanical strength, the ladder-type structure may have a ladder-type structure represented by the following General Formula (3).

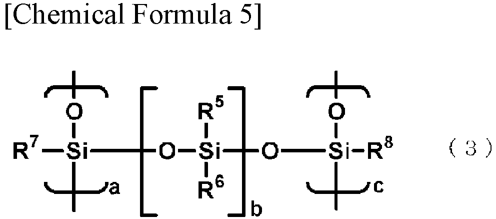

In Formula (3), R⁵, R⁶, R⁷, and R⁸ each independently represent an alkyl group or an aryl group; "a" and "c" each independently represent an integer from 1 to 3000; and "b" represents an integer from 1 to 50. Here, examples of the aryl group include a phenyl group and a substituted phenyl group. Furthermore, examples of a substituent of the substituted phenyl group include an alkyl group, a vinyl group, a mercapto group, an amino group, a nitro group, and a cyano group. In Formula (3), when "b" represents an integer of 2 or greater, two or more R⁵'s may be respectively identical or different, and similarly, two or more R⁶'s may be respectively identical or different. Furthermore, in Formula (3), when "a" represents an integer of 2 or greater, two or more R⁷'s may be respectively identical or different, and similarly, when "c" represents an integer of 2 or greater, two or more R⁸'s may be respectively identical or different.

From the viewpoint of obtaining superior flexibility, in Formulae (2) and (3), R⁵, R⁶, R⁷, and R⁸ (provided that R⁷ and R⁸ are in Formula (3) only) each independently represent an alkyl group having 1 to 6 carbon atoms, a phenyl group, or the like, and examples of this alkyl group include a methyl group. Furthermore, in Formula (3), "a" and "c" can be each independently set to 6 to 2000; however, "a" and "c" may be each 10 to 1000. Furthermore, in Formulae (2) and (3), "b" can be set to 2 to 30; however, "b" may be 5 to 20.

Furthermore, structures represented by the following General Formulae (4) to (6) can be introduced into the skeleton of the aerogel by using the silane monomer that will be described below as a raw material of the aerogel. The aerogel according to the present embodiment can have any one alone or two or more kinds of these structures.

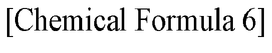

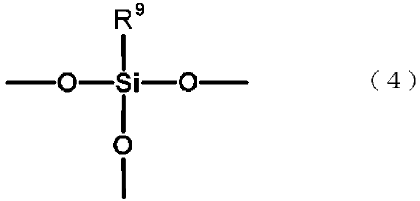

In Formula (4), R⁹ represents an alkyl group. Here, examples of the alkyl group include an alkyl group having 1 to 6 carbon atoms, and examples of this alkyl group include a methyl group.

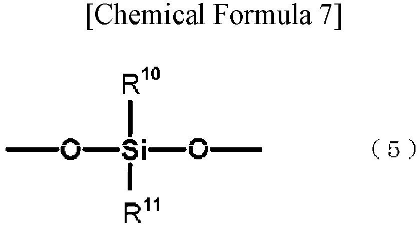

In Formula (5), R¹⁰ and R¹¹ each independently represent an alkyl group. Here, examples of the alkyl group include an alkyl group having 1 to 6 carbon atoms, and examples of this alkyl group include a methyl group.

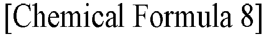

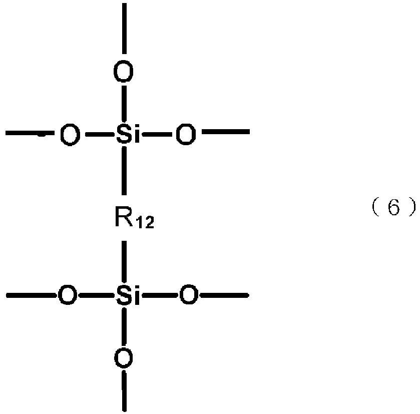

In Formula (6), R¹² represents an alkylene group. Here, examples of the alkylene group include an alkylene group having 1 to 10 carbon atoms, and examples of this alkylene group include an ethylene group and a hexylene group.

The aerogel according to the present embodiment may further contain silica particles in addition to the aerogel component, from the viewpoint of further toughening the aerogel and from the viewpoint of achieving further superior thermal insulation properties and flexibility. An aerogel containing an aerogel component and silica particles can also be referred to as aerogel composite. An aerogel composite is considered to have a cluster structure, which is a feature of aerogel, while having the aerogel component compositized with the silica particles, and to have a three-dimensionally fine porous structure.

To follow the above-mentioned expression, an aerogel containing an aerogel component and silica particles can be considered as a dried product of a wet gel, which is a condensate of a sol containing at least one selected from the group consisting of a silicon compound having a hydrolysable functional group or a condensable functional group and a hydrolysis product of a silicon compound having a hydrolysable functional group, and silica particles.

The silica particles can be used without any particular limitation, and examples include amorphous silica particles. Examples of the amorphous silica particles include fused silica particles, fumed silica particles, and colloidal silica particles. Among these, colloidal silica particles have high monodispersity, and aggregation in a sol is easily suppressed. The silica particles may be silica particles having a hollow structure, a porous structure, or the like.

The shape of the silica particles is not particularly limited, and examples include a spherical shape, a cocoon shape, and an associated shape. Among these, by using spherical particles as the silica particles, aggregation in a sol is easily suppressed. The average primary particle size of the silica particles may be 1 nm or more, may be 5 nm or more, or may be 20 nm or more, from the viewpoint that adequate strength and flexibility are easily imparted to the aerogel, and an aerogel having excellent shrinkage resistance during drying is easily obtained. The average primary particle size of the silica particles may be 500 nm or less, may be 300 nm or less, or may be 100 nm or less, from the viewpoint that solid heat conduction of the silica particles is easily suppressed, and an aerogel having excellent thermal insulation properties is easily obtained. From these viewpoints, the average primary particle size of the silica particles may be 1 to 500 nm, may be 5 to 300 nm, or may be 20 to 100 nm.

According to the present embodiment, the average particle size of the aerogel component and the average primary particle size of the silica particles can be obtained by directly observing the aerogel using a scanning electron microscope (hereinafter, abbreviated to "SEM"). The term "diameter" as used herein means the diameter in a case in which a cross-section of a particle exposed at a cross-section of the aerogel is regarded as a circle. Furthermore, the term "diameter in a case in which a cross-section is regarded as a circle" is the diameter of a perfect circle when the area of the cross-section is substituted with a perfect circle having the same area. For the calculation of the average particle size, the diameters of circles are determined for one hundred particles, and the average of them is taken.

The average particle size of the silica particles can be measured also from the raw material. For example, a biaxial average primary particle size is calculated as follows from the results obtained by observing any arbitrary twenty particles by SEM. That is, when colloidal silica particles dispersed in water usually at a solid content concentration of about 5% to 40% by mass are taken as an example, a chip obtained by cutting a wafer with patterned wiring into a size of 2 cm on each side is immersed for about 30 seconds in the dispersion liquid of the colloidal silica particles, and then the chip is rinsed with pure water for about 30 seconds and dried by nitrogen blowing. Subsequently, the chip is mounted on a sample holder for SEM observation, an accelerating voltage of 10 kV is applied to the chip, the silica particles are observed at a magnification ratio of 100000 times, and an image is captured. Twenty silica particles are arbitrarily selected from the image thus obtained, and the average of the particle sizes of those particles is designated as average particle size.

The number of silanol groups per 1 g of the silica particles may be 10×10¹⁸ units/g or more, may be 50×10¹⁸ units/g or more, or may be 100×10¹⁸ units/g or more, from the viewpoint that an aerogel having excellent shrinkage resistance is easily obtained. The number of silanol groups per 1 g of the silica particles may be 1000×10¹⁸ units/g or less, may be 800×10¹⁸ units/g or less, or may be 700×10¹⁸ units/g or less, from the viewpoint that a homogeneous aerogel is easily obtained. From these viewpoints, the number of silanol groups per 1 g of the silica particles may be 10×10¹⁸ to 1000×10¹⁸ units/g, may be 50×10¹⁸ to 800×10¹⁸ units/g, or may be 100×10¹⁸ to 700×10¹⁸ units/g.

### (Method for producing aerogel particles)

The method for producing aerogel particles is not particularly limited; however, for example, the aerogel particles can be produced by the following method.

The aerogel particles of the present embodiment can be produced by a production method that mainly includes a sol production step; a wet gel production step of gelling a sol obtained in the sol production step and then aging the resultant to obtain a wet gel; a washing and solvent replacement step of subjecting the wet gel obtained in the wet gel production step to washing and (if necessary) solvent replacement; a drying step of drying the wet gel that has been subjected to washing and solvent replacement; and a pulverization step of pulverizing the aerogel obtained by drying.

Furthermore, the aerogel particles may also be produced by a production method that mainly includes a sol production step; a wet gel production step; a wet gel pulverization step of pulverizing a wet gel obtained in the wet gel production step; a washing and solvent replacement step; and a drying step.

The aerogel particles thus obtained can have the size further arranged by sieving, classification, or the like. Dispersibility can be increased by regulating the size of the particles. The term "sol" means a state before the occurrence of a gelation reaction, and according to the present embodiment, for example, the sol means a state in which a silicon compound and optionally silica particles are dissolved or dispersed in a solvent. Furthermore, a wet gel means a gel solid in a wet state, the gel solid comprising a liquid medium but not having fluidity.

### (Sol production step)

The sol production step is a step of mixing a silicon compound and optionally silica particles (may be a solvent comprising silica particles) in a solvent and performing a hydrolysis reaction as necessary. More specifically, the sol production step is a step of producing a sol comprising a silicon compound having a hydrolysable functional group, a silicon compound having a condensable functional group, a hydrolysis product obtained by hydrolyzing a silicon compound having a hydrolysable functional group, and the like. The sol production step can also be a step of producing a sol containing at least one selected from the group consisting of a silicon compound having a hydrolysable functional group or a condensable functional group, and a hydrolysis product of a silicon compound having a hydrolysable functional group. The aerogel described above as an example can be obtained by drying a wet gel produced from such a sol.

As the silicon compound, a polysiloxane compound can be used. That is, the above-described sol can contain at least one compound selected from the group consisting of a polysiloxane compound having a hydrolysable functional group or a condensable functional group, and a hydrolysis product of a polysiloxane compound having a hydrolysable functional group (hereinafter, will be referred to as "polysiloxane compound group" depending on cases).

The functional group for the polysiloxane compound is not particularly limited; however, the functional group can be a group that reacts with the same functional group or reacts with another functional group. An example of the hydrolysable functional group may be an alkoxy group. Examples of the condensable functional group include a hydroxyl group, a silanol group, a carboxyl group, and a phenolic hydroxyl group. The hydroxyl group may be included in a hydroxyl group-containing group such as a hydroxyalkyl group. The polysiloxane compound having a hydrolysable functional group or a condensable functional group may further have a reactive group different from the hydrolysable functional group and the condensable functional group (a functional group that does not correspond to the hydrolysable functional group and the condensable functional group). Examples of the reactive group include an epoxy group, a mercapto group, a glycidoxy group, a vinyl group, an acryloyl group, a methacryloyl group, and an amino group. The epoxy group may be included in an epoxy group-containing group such as a glycidoxy group. Polysiloxane compounds having these functional groups and reactive groups may be used singly or as a mixture of two or more kinds thereof. Among these functional groups and reactive groups, examples of a group that enhances flexibility of the aerogel include an alkoxy group, a silanol group, and a hydroxyalkyl group, and among these, an alkoxy group and a hydroxyalkyl group can further enhance the compatibility of the sol. Furthermore, from the viewpoint of enhancing the reactivity of the polysiloxane compound and lowering the thermal conductivity of the aerogel, the number of carbon atoms of the alkoxy group and the hydroxyalkyl group can be set to 1 to 6; however, from the viewpoint of further enhancing the flexibility of the aerogel, the number of carbon atoms may be 2 to 4.

Examples of a polysiloxane compound having a hydroxyalkyl group in the molecule include a polysiloxane compound having a structure represented by the following General Formula (A). By using a polysiloxane compound having a structure represented by the following General Formula (A), structures represented by General Formula (1) and Formula (1a) can be introduced into the skeleton of the aerogel.

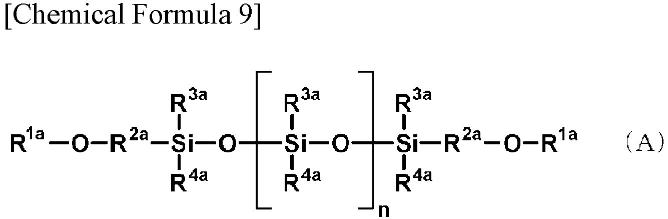

In Formula (A), R^{1a} represents a hydroxyalkyl group; R^{2a} represents an alkylene group; R^{3a} and R^{4a} each independently represent an alkyl group or an aryl group; and "n" represents an integer from 1 to 50. Here, examples of the aryl group include a phenyl group and a substituted phenyl group. Furthermore, examples of a substituent for the substituted phenyl group include an alkyl group, a vinyl group, a mercapto group, an amino group, a nitro group, and a cyano group. In Formula (A), two R^{1a}'s may be respectively identical or different, and similarly, two R^{2a}'s may be respectively identical or different. Furthermore, in Formula (A), two or more R^{3a}'s may be respectively identical or different, and similarly, two or more R^{4a}'s may be respectively identical or different.

A flexible aerogel having a low thermal conductivity is more easily obtained by using a wet gel (produced from a sol), which is a condensate of a sol containing a polysiloxane compound having the above-described structure. From such a viewpoint, in Formula (A), R^{1a} may represent a hydroxyalkyl group having 1 to 6 carbon atoms or the like, and examples of this hydroxyalkyl group include a hydroxyethyl group and a hydroxypropyl group. Furthermore, in Formula (A), R^{2a} may represent an alkylene group having 1 to 6 carbon atoms or the like, and examples of this alkylene group include an ethylene group and a propylene group. Furthermore, in Formula (A), R^{3a} and R^{4a} may each independently represent an alkyl group having 1 to 6 carbon atoms, a phenyl group, or the like, and examples of this alkyl group include a methyl group. Furthermore, in Formula (A), "n" can be set to 2 to 30; however, "n" may also be 5 to 20.

Regarding the polysiloxane compound having a structure represented by the above-described General Formula (A), a commercially available product can be used, and examples include compounds such as X-22-160AS, KF-6001, KF-6002, and KF-6003 (all manufactured by Shin-Etsu Chemical Co., Ltd.), and compounds such as XF42-B0970 and Fluid OFOH 702-4% (all manufactured by Momentive Performance Materials Japan LLC).

Regarding the polysiloxane compound having an alkoxy group in the molecule, a polysiloxane compound having a structure represented by the following General Formula (B) may be mentioned. By using a polysiloxane compound having a structure represented by the following General Formula (B), a ladder-type structure having bridges represented by General Formula (2) or (3) can be introduced into the skeleton of the aerogel.

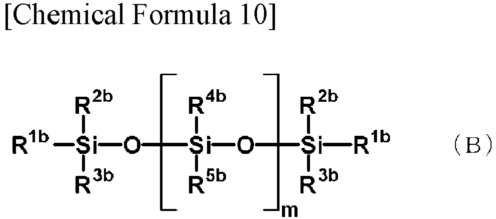

In Formula (B), R^{1b} represents an alkyl group, an alkoxy group, or an aryl group; R^{2b} and R^{3b} each independently represent an alkoxy group; R^{4b} and R^{5b} each independently represent an alkyl group or an aryl group; and "m" represents an integer from 1 to 50. Here, examples of the aryl group include a phenyl group and a substituted phenyl group. Furthermore, examples of a substituent for the substituted phenyl group include an alkyl group, a vinyl group, a mercapto group, an amino group, a nitro group, and a cyano group. In Formula (B), two R^{1b}'s may be respectively identical or different, two R^{2b}'s may be respectively identical or different, and similarly, two R^{3b}'s may be respectively identical or different. Furthermore, in Formula (B), when "m" represents an integer of 2 or greater, two or more R^{4b}'s may be respectively identical or different, and similarly, two or more R^{5b}'s may be respectively identical or different.

A flexible aerogel having a low thermal conductivity is more easily obtained by using a wet gel (produced from a sol), which is a condensate of a sol containing a polysiloxane compound having the above-described structure or a hydrolysis product thereof. From such a viewpoint, in Formula (B), R^{1b} may represent an alkyl group having 1 to 6 carbon atoms, an alkoxy group having 1 to 6 carbon atoms, or the like, and examples of this alkyl group or alkoxy group include a methyl group, a methoxy group, and an ethoxy group. Furthermore, in Formula (B), R^{2b} and R^{3b} may each independently represent an alkoxy group having 1 to 6 carbon atoms or the like, and examples of this alkoxy group include a methoxy group and an ethoxy group. Furthermore, in Formula (B), R^{4b} and R^{5b} may each independently represent an alkyl group having 1 to 6 carbon atoms, a phenyl group, or the like, and examples of this alkyl group include a methyl group. Furthermore, in Formula (B), "m" can be set to 2 to 30; however, "m" may also be 5 to 20.

The polysiloxane compound having a structure represented by the above-described General Formula (B) can be obtained by appropriately referring to the production methods reported in Japanese Unexamined Patent Publication No. 2000-26609, Japanese Unexamined Patent Publication No. 2012-233110, and the like.

Since an alkoxy group is hydrolysable, there is a possibility that a polysiloxane compound having an alkoxy group may exist as a hydrolysis product in a sol, and a polysiloxane compound having an alkoxy group and a hydrolysis product thereof may exist as a mixture. Furthermore, with regard to the polysiloxane compound having an alkoxy group, the alkoxy groups in the molecule may be entirely hydrolyzed or may be partially hydrolyzed.

These compounds, namely, a polysiloxane compound having a hydrolysable functional group or a condensable functional group, and a hydrolysis product of a polysiloxane compound having a hydrolysable functional group, may be used singly or as a mixture of two or more kinds thereof.

In producing the aerogel according to the present embodiment, a silicon compound other than the above-mentioned polysiloxane compound can be used as the silicon compound. Examples of such a silicon compound include a silane monomer. That is, a sol containing the above-described silicon compound can contain at least one selected from the group consisting of a silane monomer having a hydrolysable functional group or a condensable functional group, and a hydrolysis product of the silane monomer having a hydrolysable functional group (hereinafter, referred to as "silane monomer group" depending on cases), in addition to the above-mentioned polysiloxane compound group or instead of the above-mentioned polysiloxane compound group. The number of silicon atoms in the molecule of a silane monomer can be set to 1 to 6.

The silane monomer having a hydrolysable functional group is not particularly limited; however, examples thereof include an alkyl silicon alkoxide. Regarding the alkyl silicon alkoxide, the number of the hydrolysable functional groups can be set to 3 or less, from the viewpoint of enhancing water resistance. Examples of such an alkyl silicon alkoxide include a monoalkyltrialkoxysilane, a monoalkyldialkoxysilane, a dialkyldialkoxysilane, a monoalkylmonoalkoxysilane, a dialkylmonoalkoxysilane, and a trialkylmonoalkoxysilane, and specific examples include methyltrimethoxysilane, methyldimethoxysilane, dimethyldiethoxysilane, dimethyldimethoxysilane, ethyltrimethoxysilane, and hexyltrimethoxysilane. Here, examples of the hydrolysable functional group include alkoxy groups such as a methoxy group and an ethoxy group.

The silane monomer having a condensable functional group is not particularly limited; however, examples include silanetetraol, methylsilanetriol, dimethylsilanediol, phenylsilanetriol, phenylmethylsilanediol, diphenylsilanediol, n-propylsilanetriol, hexylsilanetriol, octylsilanetriol, decylsilanetriol, and trifluoropropylsilanetriol.

The silane monomer may further have an above-mentioned reactive group different from the hydrolysable functional group and the condensable functional group (a functional group that does not correspond to the hydrolysable functional group and the condensable functional group).

As the silane monomer having a hydrolysable functional group and a reactive group, vinyltrimethoxysilane, 3-glycidoxypropyltrimethoxysilane, 3-glycidoxypropylmethyldimethoxysilane, 3-methacryloxypropyltrimethoxysilane, 3-methacryloxypropylmethyldimethoxysilane, 3-acryloxypropyltrimethoxysilane, 3-mercaptopropyltrimethoxysilane, 3-mercaptopropylmethyldimethoxysilane, N-phenyl-3-aminopropyltrimethoxysilane, N-2-(aminoethyl)-3-aminopropylmethyldimethoxysilane, and the like can also be used.

As the silane monomer having a condensable functional group and a reactive group, vinylsilanetriol, 3-glycidoxypropylsilanetriol, 3-glycidoxypropylmethylsilanediol, 3-methacryloxypropylsilanetriol, 3 -methacryloxypropylmethylsilanediol, 3 -acryloxypropylsilanetriol, 3-mercaptopropylsilanetriol, 3-mercaptopropylmethylsilanediol, N-phenyl-3-aminopropylsilanetriol, N-2-(aminoethyl)-3-aminopropylmethylsilanediol, and the like can also be used.

The silane monomer may have two or more silicon atoms, and bistrimethoxysilylmethane, bistrimethoxysilylethane, bistrimethoxysilylhexane, and the like can also be used.

The silane monomer having a hydrolysable functional group or a condensable functional group, and a hydrolysis product of the silane monomer having a hydrolysable functional group may be used singly or as a mixture of two or more kinds thereof.

In a case in which the aerogel further comprises silica particles, the sol production step can be a step of producing a sol containing at least one selected from the group consisting of a silicon compound having a hydrolysable functional group or a condensable functional group, and a hydrolysis product of a silicon compound having a hydrolysable functional group, and silica particles.

The content of the polysiloxane compound group included in the sol (sum total of the content of the polysiloxane compound having a hydrolysable functional group or a condensable functional group, and the content of a hydrolysis product of the polysiloxane compound having a hydrolysable functional group) may be 5 parts by mass or more or may be 10 parts by mass or more, with respect to 100 parts by mass of the total amount of the sol, from the viewpoint that satisfactory reactivity is more easily obtained. The content of the polysiloxane compound group included in the above-described sol may be 50 parts by mass or less or may be 30 parts by mass or less, with respect to 100 parts by mass of the total amount of the sol, from the viewpoint that satisfactory compatibility is more easily obtained. From these viewpoints, the content of the polysiloxane compound group included in the sol may be 5 to 50 parts by mass or may be 10 to 30 parts by mass, with respect to 100 parts by mass of the total amount of the sol.

In a case in which the sol contains a silane monomer, the content of the silane monomer group (sum total of the content of the silane monomer having a hydrolysable functional group or a condensable functional group, and the content of a hydrolysis product of the silane monomer having a hydrolysable functional group) may be 5 parts by mass or more or may be 10 parts by mass or more, with respect to 100 parts by mass of the total amount of the sol, from the viewpoint that satisfactory reactivity is more easily obtained. The content of the silane monomer group included in the above-described sol may be 50 parts by mass or less or may be 30 parts by mass or less, with respect to 100 parts by mass of the total amount of the sol, from the viewpoint that satisfactory compatibility is more easily obtained. From these viewpoints, the content of the silane monomer group included in the sol may be 5 to 50 parts by mass or may be 10 to 30 parts by mass.

In a case in which the sol comprises both the polysiloxane compound group and the silane monomer group, the ratio of the content of the polysiloxane compound group and the content of the silane monomer group may be 1 : 0.5 or more or may be 1 : 1 or more, from the viewpoint that satisfactory compatibility is more easily obtained. The ratio of the content of the polysiloxane compound group and the content of the silane monomer group may be 1 : 4 or less or may be 1 : 2 or less, from the viewpoint that shrinkage of the gel is more easily suppressed. From these viewpoints, the ratio of the content of the polysiloxane compound group and the content of the silane monomer group may be 1 : 0.5 to 1 : 4 or may be 1 : 1 to 1 : 2.

In a case in which silica particles are contained in the above-described sol, the content of the silica particles may be 1 part by mass or more or may be 4 parts by mass or more, with respect to 100 parts by mass of the total amount of the sol, from the viewpoint that appropriately strength is easily imparted to the aerogel, and an aerogel having excellent shrinkage resistance at the time of drying is easily obtained. The content of the silica particles may be 20 parts by mass or less or may be 15 parts by mass or less, with respect to 100 parts by mass of the total amount of the sol, from the viewpoint that solid heat conduction of the silica particles is easily suppressed, and an aerogel having excellent thermal insulation properties is easily obtained. From these viewpoints, the content of the silica particles may be 1 to 20 parts by mass or may be 4 to 15 parts by mass, with respect to 100 parts by mass of the total amount of the sol.

In the sol production step, a solvent is used for the mixing of the silicon compound and for hydrolysis depending on cases. As the solvent, for example, water, or a mixed liquid of water and an alcohol can be used. Examples of the alcohol include methanol, ethanol, n-propanol, 2-propanol, n-butanol, 2-butanol, and t-butanol. Among these, from the viewpoint of lowering the interfacial tension with the gel wall, examples of an alcohol having low surface tension and a low boiling point include methanol, ethanol, and 2-propanol. These may be used singly or as a mixture of two or more kinds thereof.

For example, in the case of using an alcohol as the solvent, the amount of the alcohol can be adjusted to 4 to 8 mol, may be 4 to 6.5, or may be 4.5 to 6 mol, with respect to 1 mol of the total amount of the polysiloxane compound group and the silane monomer group. By adjusting the amount of the alcohol to 4 mol or more, satisfactory compatibility is more easily obtained, and by adjusting the amount to 8 mol or less, shrinkage of the gel is more easily suppressed.

Furthermore, the solvent may comprise an acid catalyst for accelerating a hydrolysis reaction. Examples of the acid catalyst include inorganic acids such as hydrofluoric acid, hydrochloric acid, nitric acid, sulfuric acid, sulfurous acid, phosphoric acid, phosphorous acid, hypophosphorous acid, bromic acid, chloric acid, chlorous acid, and hypochlorous acid; acidic phosphates such as acidic aluminum phosphate, acidic magnesium phosphate, and acidic zinc phosphate; and organic carboxylic acids such as acetic acid, formic acid, propionic acid, oxalic acid, malonic acid, succinic acid, citric acid, malic acid, adipic acid, and azelaic acid. Among these, as an acid catalyst that further enhances the water resistance of the resulting aerogel, an organic carboxylic acid may be mentioned. Examples of this organic carboxylic acid include acetic acid; however, formic acid, propionic acid, oxalic acid, malonic acid, and the like may also be used. These may be used singly or as a mixture of two or more kinds thereof.

By using an acid catalyst, a hydrolysis reaction of a silicon compound can be accelerated, and a sol can be obtained in a shorter time period.

The amount of addition of the acid catalyst can be adjusted to 0.001 to 0.1 parts by mass with respect to 100 parts by mass of the total amount of the polysiloxane compound group and the silane monomer group.

Furthermore, as disclosed in Japanese Patent No. 5250900, a surfactant, a thermally hydrolysable compound, and the like can also be added to the solvent.

Regarding the surfactant, a nonionic surfactant, an ionic surfactant, and the like can be used. These may be used singly or as a mixture of two or more kinds thereof.

Regarding the nonionic surfactant, for example, a compound comprising a hydrophilic part such as polyoxyethylene and a hydrophobic part mainly formed from an alkyl group, a compound comprising a hydrophilic part such as polyoxypropylene, and the like can be used. Examples of the compound comprising a hydrophilic part such as polyoxyethylene and a hydrophobic part mainly formed from an alkyl group include polyoxyethylene nonyl phenyl ether, polyoxyethylene octyl phenyl ether, and polyoxyethylene alkyl ether. Examples of the compound comprising a hydrophilic part such as polyoxypropylene include polyoxypropylene alkyl ether, and a block copolymer of polyoxyethylene and polyoxypropylene.

Examples of the ionic surfactant include a cationic surfactant, an anionic surfactant, and an amphoteric surfactant. Examples of the cationic surfactant include cetyltrimethylammonium bromide and cetyltrimethylammonium chloride, and examples of the anionic surfactant include sodium dodecyl sulfonate. Furthermore, examples of the amphoteric surfactant include an amino acid-based surfactant, a betaine-based surfactant, and an amine oxide-based surfactant. Examples of the amino acid-based surfactant include acylglutamic acid. Examples of the betaine-based surfactant include betaine lauryl dimethyl aminoacetate and betaine stearyl dimethyl aminoacetate. Examples of the amine oxide-based surfactant include lauryl dimethyl amine oxide.

These surfactants are considered to have an action of reducing the difference in chemical affinity between the solvent and the growing siloxane polymer in the reaction system and suppressing phase separation, in the wet gel production step that will be described below.

The amount of addition of the surfactant depends on the type of the surfactant, or the type and amount of the silicon compound; however, for example, the amount of addition can be adjusted to 1 to 100 parts by mass with respect to 100 parts by mass of the total amount of the polysiloxane compound group and the silane monomer group. The same amount of addition may be 5 to 60 parts by mass.

It is considered that a thermally hydrolysable compound generates a base catalyst as a result of thermal hydrolysis to make the reaction solution basic and accelerates a sol-gel reaction in the wet gel production step that will be described below. Therefore, this thermally hydrolysable compound is not particularly limited so long as it is a compound that can make the reaction solution basic after hydrolysis, and examples thereof include urea; acid amides such as formamide, N-methylformamide, N,N-dimethylformamide, acetamide, N-methylacetamide, and N,N-dimethylacetamide; and cyclic nitrogen compounds such as hexamethylenetetramine. Among these, urea in particular allows the above-described accelerating effect to be easily obtained.

The amount of addition of the thermally hydrolysable compound is not particularly limited so long as it is an amount that can sufficiently accelerate a sol-gel reaction in the wet gel production step that will be described below. For example, in a case in which urea is used as the thermally hydrolysable compound, the amount of addition thereof can be adjusted to 1 to 200 parts by mass with respect to 100 parts by mass of the total amount of the polysiloxane compound group and the silane monomer group. The same amount of addition may also be 2 to 150 parts by mass. By adjusting the amount of addition to 1 part by mass or more, satisfactory reactivity is more easily obtained, and by adjusting the amount of addition to 200 parts by mass or less, precipitation of crystals and a decrease in the gel density are more easily suppressed.

In the sol production step, components such as carbon graphite, an aluminum compound, a magnesium compound, a silver compound, and a titanium compound may be added to the solvent for the purpose of suppressing heat ray radiation and the like.

Hydrolysis of the sol production step depends on the types and amounts of the silicon compound, silica particles, acid catalyst, surfactant, and the like in the mixed liquid; however, for example, the hydrolysis may be carried out for 10 minutes to 24 hours in a temperature environment at 20°C to 60°C, or may be carried out for 5 minutes to 8 hours in a temperature environment at 50°C to 60°C. Thereby, the hydrolysable functional groups in the silicon compound are sufficiently hydrolyzed, and a hydrolysis product of the silicon compound can be obtained more reliably.

However, in a case in which a thermally hydrolysable compound is added into the solvent, the temperature environment of the sol production step may be regulated to a temperature at which hydrolysis of the thermally hydrolysable compound is suppressed, and gelation of a sol is suppressed. The temperature in this case may be any temperature so long as it is a temperature at which hydrolysis of the thermally hydrolysable compound can be suppressed. For example, in the case of using urea as the thermally hydrolysable compound, the temperature environment of the sol production step can be set to 0°C to 40°C; however, the temperature environment may also be 10°C to 30°C.

### (Wet gel production step)

The wet gel production step is a step of gelating a sol obtained in the sol production step and then aging the gel to obtain a wet gel. In the present step, a base catalyst can be used in order to accelerate gelation.

Examples of the base catalyst include carbonates such as calcium carbonate, potassium carbonate, sodium carbonate, barium carbonate, magnesium carbonate, lithium carbonate, ammonium carbonate, copper (II) carbonate, iron (II) carbonate, and silver (I) carbonate; hydrogen carbonates such as calcium hydrogen carbonate, potassium hydrogen carbonate, sodium hydrogen carbonate, and ammonium hydrogen carbonate; alkali metal hydroxides such as lithium hydroxide, sodium hydroxide, potassium hydroxide, and cesium hydroxide; ammonium compounds such as ammonium hydroxide, ammonium fluoride, ammonium chloride, and ammonium bromide; basic sodium salts of phosphoric acid such as sodium metaphosphate, sodium pyrophosphate, and sodium polyphosphate; aliphatic amines such as allylamine, diallylamine, triallylamine, isopropylamine, diisopropylamine, ethylamine, diethylamine, triethylamine, 2-ethylhexylamine, 3-ethoxypropylamine, diisobutylamine, 3-(diethylamino)propylamine, di-2-ethylhexylamine, 3-(dibutylamino)propylamine, tetramethylethylenediamine, t-butylamine, sec-butylamine, propylamine, 3 -(methylamino)propylamine, 3-(dimethylamino)propylamine, 3-methoxyamine, dimethylethanolamine, methyldiethanolamine, diethanolamine, and triethanolamine; and nitrogen-containing heterocyclic compounds such as morpholine, N-methylmorpholine, 2-methylmorpholine, piperazine and derivatives thereof, piperidine and derivatives thereof, and imidazole and derivatives thereof. Among these, ammonium hydroxide (aqueous ammonia) is superior from the viewpoint that ammonium hydroxide is not likely to impair water resistance because the compound is highly volatile and is not likely to remain in the aerogel particles after drying, and from the viewpoint of economic efficiency. The above-described basic catalyst may be used singly or as a mixture of two or more kinds thereof.

By using a basic catalyst, a dehydration condensation reaction or a dealcoholization condensation reaction of the silicon compound and the silica particles in the sol can be accelerated, and gelation of the sol can be carried out in a shorter time period. Furthermore, thereby, a wet gel having higher strength (rigidity) can be obtained. Particularly, since ammonia is highly volatile and is not likely to remain in the aerogel particles, aerogel particles having superior water resistance can be obtained by using ammonia as the basic catalyst.

The amount of addition of the basic catalyst can be adjusted to 0.5 to 5 parts by mass with respect to 100 parts by mass of the total amount of the polysiloxane compound group and the silane monomer group; however, the amount of addition may also be 1 to 4 parts by mass. By adjusting the amount of addition to 0.5 parts by mass or more, gelation can be carried out in a shorter time period, and by adjusting the amount of addition to 5 parts by mass or less, deterioration of water resistance can be further suppressed.

Gelation of the sol in the wet gel production step may be carried out in a tightly sealed vessel so that the solvent and the basic catalyst are not volatilized. The gelation temperature can be set to 30°C to 90°C; however, the gelation temperature may also be 40°C to 80°C. By setting the gelation temperature to 30°C or higher, gelation can be carried out in a shorter time period, and a wet gel having higher strength (rigidity) can be obtained. Furthermore, by setting the gelation temperature to 90°C or lower, volatilization of the solvent (particularly, an alcohol) is easily suppressed, and therefore, gelation can be achieved while suppressing volumetric shrinkage.

Aging in the wet gel production step may be carried out in a tightly sealed vessel so that the solvent and the basic catalyst are not volatilized. Binding of the components constituting the wet gel is strengthened by aging, and as a result, a wet gel having sufficiently high strength (rigidity) for suppressing shrinkage during drying can be obtained. The aging temperature can be set to 30°C to 90°C; however, the aging temperature may also be 40°C to 80°C. By setting the aging temperature to 30°C or higher, a wet gel having higher strength (rigidity) can be obtained, and by setting the aging temperature to 90°C or lower, volatilization of the solvent (particularly, an alcohol) is easily suppressed, so that gelation can be achieved while suppressing volumetric shrinkage.

Since it is difficult to identify the time point for the completion of gelation of the sol in many cases, gelation and subsequent aging of the sol may be carried out continuously in a series of operations.

The gelation time and the aging time can be appropriately set according to the gelation temperature and the aging temperature. In a case in which silica particles are contained in a sol, particularly the gelation time can be shortened as compared to a case in which silica particles are not contained. It is speculated to be because the silanol group or reactive group carried by the silicon compound in the sol forms hydrogen bonding or chemical bonding with the silanol group of the silica particles. The gelation time can be adjusted to 10 to 120 minutes; however, the gelation time may be 20 to 90 minutes. By adjusting the gelation time to 10 minutes or longer, a homogeneous wet gel is easily obtained, and by adjusting the gelation time to 120 minutes or shorter, simplification of processes including from the washing and solvent replacement step that will be described below to the drying step can be achieved. The total time of the gelation time and the aging time for the gelation and aging steps as a whole can be adjusted to 4 to 480 hours; however, the total time may be 6 to 120 hours. By adjusting the sum of the gelation time and the aging time to 4 hours or longer, a wet gel having higher strength (rigidity) can be obtained, and by adjusting the sum to 480 hours or shorter, the effect of aging is maintained more easily.

In order to decrease the density of the obtainable aerogel particles or to increase the average pore diameter, the gelation temperature and the aging temperature may be increased within the above-described ranges, or the total time of the gelation time and the aging time may be lengthened within the above-described range. Furthermore, in order to increase the density of the obtainable aerogel particles or to decrease the average pore diameter, the gelation temperature and the aging temperature may be lowered within the above-described ranges, or the total time of the gelation time and the aging time may be shortened within the above-described range.

### (Wet gel pulverization step)

In the case of carrying out a wet gel pulverization step, the wet gel obtained in the wet gel production step is pulverized. Pulverization can be carried out by, for example, introducing the wet gel into a Henschel mixer or performing the wet gel production step in a mixer, and operating the mixer under appropriate conditions (speed of rotation and time). Furthermore, in an easier way, pulverization can be carried out by introducing the wet gel into a sealable vessel or performing the wet gel production step in a sealable vessel, and shaking the wet gel for an appropriate time period using a shaking apparatus such as a shaker. The particle size of the wet gel can also be adjusted as necessary, by using a jet mill, a roller mill, a bead mill, or the like.

### (Washing and solvent replacement step)

The washing and solvent replacement step is a step having a step of washing the wet gel obtained by the wet gel production step or the wet gel pulverization step (washing step), and having a step of replacing the washing liquid in the wet gel with a solvent appropriate for the drying conditions (drying step that will be described below) (solvent replacement step). The washing and solvent replacement step can be carried out in an embodiment of performing only the solvent replacement step without performing the step of washing the wet gel; however, from the viewpoint of reducing impurities such as unreacted reactants and side products in the wet gel and enabling the production of aerogel particles having higher purity, the wet gel may be washed.

In the washing step, the wet gel obtained by the wet gel production step or the wet gel pulverization step is washed. This washing can be repeatedly carried out, for example, using water or an organic solvent. At this time, the washing efficiency can be increased by heating the wet gel.

As the organic solvent, various organic solvents such as methanol, ethanol, 1-propanol, 2-propanol, 1-butanol, acetone, methyl ethyl ketone, 1,2-dimethoxyethane, acetonitrile, hexane, toluene, diethyl ether, chloroform, ethyl acetate, tetrahydrofuran, methylene chloride, N,N-dimethylformamide, dimethyl sulfoxide, acetic acid, and formic acid can be used. The above-described organic solvents may be used singly or as a mixture of two or more kinds thereof.

In the solvent replacement step that will be described below, a solvent having low surface tension can be used in order to suppress shrinkage of the gel caused by drying. However, solvents having low surface tension generally have very low mutual solubility with water. Therefore, in the case of using a solvent having low surface tension for the solvent replacement step, examples of the organic solvent that is used in the washing step include hydrophilic organic solvents having high mutual solubility with both water and solvents having low surface tension. A hydrophilic organic solvent used in the washing step can accomplish the role of preliminary replacement for the solvent replacement step. Among the above-described organic solvents, examples of the hydrophilic organic solvent include methanol, ethanol, 2-propanol, acetone, and methyl ethyl ketone. Methanol, ethanol, methyl ethyl ketone, and the like are excellent from the viewpoint of economic efficiency.

The amount of water or the organic solvent to be used for the washing step can be adjusted to an amount that can sufficiently replace the solvent in the wet gel and perform washing. This amount can be adjusted to an amount equivalent to 3 to 10 times the volume of the wet gel. Washing can be repeated until the percentage of water content in the wet gel after washing reaches 10% by mass or less with respect to the silica mass.

The temperature environment for the washing step can be adjusted to a temperature lower than or equal to the boiling point of the solvent used for washing, and for example, in the case of using methanol, the temperature environment can be attained by heating to about 30°C to 60°C.

In the solvent replacement step, the solvent of the washed wet gel is replaced with a predetermined solvent for replacement in order to suppress shrinkage of the aerogel during the drying step. At this time, the replacement efficiency can be increased by heating. Regarding the solvent for replacement, specifically, in a case in which the wet gel is dried at a temperature lower than the critical point of the solvent used for drying under atmospheric pressure in the drying step, the solvent having low surface tension that will be described below may be mentioned. On the other hand, in the case of performing supercritical drying, examples of the solvent for replacement include ethanol, methanol, 2-propanol, dichlorodifluoromethane, carbon dioxide, and solvents obtained by mixing two or more kinds of these.

As the solvent having low surface tension, a solvent having a surface tension of 30 mN/m or less at 20°C may be mentioned. This surface tension may be 25 mN/m or less or may be 20 mN/m or less. Examples of the solvent having low surface tension include aliphatic hydrocarbons such as pentane (15.5), hexane (18.4), heptane (20.2), octane (21.7), 2-methylpentane (17.4), 3-methylpentane (18.1), 2-methylhexane (19.3), cyclopentane (22.6), cyclohexane (25.2), and 1-pentene (16.0); aromatic hydrocarbons such as benzene (28.9), toluene (28.5), m-xylene (28.7), and p-xylene (28.3); halogenated hydrocarbons such as dichloromethane (27.9), chloroform (27.2), tetrachlorocarbon (26.9), 1-chloropropane (21.8), and 2-chloropropane (18.1); ethers such as ethyl ether (17.1), propyl ether (20.5), isopropyl ether (17.7), butyl ethyl ether (20.8), and 1,2-dimethoxyethane (24.6); ketones such as acetone (23.3), methyl ethyl ketone (24.6), methyl propyl ketone (25.1), and diethyl ketone; and esters such as methyl acetate (24.8), ethyl acetate (23.8), propyl acetate (24.3), isopropyl acetate (21.2), isobutyl acetate (23.7), and ethyl butyrate (24.6) (the numbers within the parentheses represent surface tension at 20°C, and the unit is [mN/m]). Among these, aliphatic hydrocarbons (hexane, heptane, and the like) have low surface tension and excellent work environment characteristics. Furthermore, among these, when a hydrophilic organic solvent such as acetone, methyl ethyl ketone, or 1,2-dimethoxyethane is used, the hydrophilic organic solvent can also be used as the organic solvent for the washing step. Among these, from the viewpoint that drying in the drying step that will be described below is easy, a solvent having a boiling point at normal pressure of 100°C or lower may also be used. The above-described solvents may be used singly or as a mixture of two or more kinds thereof.

The amount of the solvent to be used for the solvent replacement step can be adjusted to an amount that can sufficiently replace the solvent in the wet gel after washing. This amount can be adjusted to an amount equivalent to 3 to 10 times the volume of the wet gel.

The temperature environment for the solvent replacement step can be set to a temperature lower than or equal to the boiling point of the solvent used for replacement, and for example, in the case of using heptane, the temperature environment can be attained by heating to about 30°C to 60°C.

In a case in which silica particles are contained in the gel, the solvent replacement step is not necessarily essential. The inferred mechanism is as follows. That is, as the silica particles function as a support for a three-dimensional network-shaped skeleton, the skeleton is supported, and shrinkage of the gel during the drying step is suppressed. Therefore, it is thought that the gel can be directly submitted to the drying step without replacing the solvent used for washing. As such, simplification of processes including from the washing and solvent replacement step to the drying step can be achieved by using silica particles.

### (Drying step)

In the drying step, the wet gel that has been subjected to washing and (if necessary) solvent replacement as described above is dried. Thereby, an aerogel (aerogel block or aerogel particles) can be obtained. That is, an aerogel obtained by drying the wet gel produced from the sol can be obtained.

The drying technique is not particularly limited, and any known normal pressure drying, supercritical drying, or freeze-drying can be used. Among these, from the viewpoint that an aerogel with low density is easily produced, drying at normal pressure or supercritical drying can be used. Furthermore, from the viewpoint that production is made possible at low cost, normal pressure drying can be used. According to the present embodiment, normal pressure means 0.1 MPa (atmospheric pressure).

The aerogel can be obtained by drying the wet gel that has been subjected to washing and (if necessary) solvent replacement, at a temperature lower than the critical point of the solvent used for drying under atmospheric pressure. The drying temperature may vary depending on the type of the replaced solvent (in a case in which solvent replacement is not carried out, the solvent used for washing); however, particularly from the viewpoint that drying at a high temperature may accelerate the evaporation rate of the solvent and cause large cracks in the gel, the drying temperature can be set to 20°C to 150°C. This drying temperature may be 60°C to 120°C. Furthermore, the drying time may vary depending on the volume of the wet gel and the drying temperature; however, the drying time can be adjusted to 4 to 120 hours. Expediting drying by applying a pressure of lower than the critical point to the extent that productivity is not impaired, is also included in drying at normal pressure.

The aerogel can also be obtained by subjecting a wet gel that has been subjected to washing and (if necessary) solvent replacement, to supercritical drying. Supercritical drying can be carried out by any known technique. Regarding the method of performing supercritical drying, for example, a method of removing the solvent at a temperature and a pressure higher than or equal to the critical point of the solvent contained in the wet gel may be mentioned. Alternatively, regarding the method of performing supercritical drying, a method of replacing all or a portion of the solvent contained in the wet gel with carbon dioxide having a lower critical point than the solvent, by immersing the wet gel in liquefied carbon dioxide under the conditions of, for example, about 20°C to 25°C and 5 to 20 MPa, and then removing carbon dioxide alone or a mixture of carbon dioxide and the solvent, may be mentioned.

The aerogel obtained by such normal pressure drying or supercritical drying may be additionally dried at normal pressure and 105°C to 200°C for about 0.5 to 2 hours. Thereby, an aerogel having a low density and smaller pores is more easily obtained. Additional drying may be carried out at normal pressure and 150°C to 200°C.

### (Pulverization step)

In a case in which the wet gel pulverization step is not carried out, aerogel particles are obtained by pulverizing the aerogel obtained by drying (aerogel block). For example, pulverization can be carried out by introducing the aerogel into a jet mill, a roller mill, a bead mill, a hammer mill, or the like and operating the apparatus at an appropriate speed of rotation and time.

### <Method for producing coating liquid and Coating liquid>

The method for producing a coating liquid includes a stirring step of stirring a raw material comprising the above-described porous particles, a binder resin, and a liquid medium using a planetary mixer. Since a planetary mixer (planetary movement type mixer) is an apparatus that stirs a raw material with low-speed shear, this stirring step can also be referred to as low-speed shear stirring step. Regarding the stirring conditions in the case of using a planetary mixer, the stirring speed can be set to 8 to 200 rpm, and the stirring time can be adjusted to 1 to 120 minutes. Suitably, the stirring speed may be 20 to 150 rpm, and the stirring time may be 5 to 80 minutes.

The method for producing a coating liquid may include a preliminary stirring step of stirring the raw material using a high-speed shear stirrer, prior to the stirring step of stirring using a planetary mixer. That is, the method for producing a coating liquid can include a high-speed shear stirring step of stirring the raw material using a high-speed shear stirrer, and a subsequent low-speed shear stirring step of stirring using a low-speed shear stirrer. A high-speed shear stirrer is a stirrer that performs shear stirring at a stirring speed of approximately 1000 rpm or higher, and specific examples include a homomixer. Regarding the stirring conditions in the case of using a high-speed shear stirrer as a preliminary stirring unit, the stirring speed can be set to 1000 to 3000 rpm, and the stirring time can be set to 1 to 20 minutes. Suitably, the stirring speed may be 1500 to 2500 rpm, and the stirring time may be 1 to 5 minutes.

Examples of the planetary mixer include PLANETARY MIXER series (manufactured by INOUE MFG., INC., product name), PD MIXER series (manufactured by INOUE MFG., INC., product name), HIVIS MIX series (manufactured by PRIMIX Corporation, product name), and HIVIS DISPER MIX series (manufactured by PRIMIX Corporation, product name), while examples of the homomixer include L5 series (manufactured by Silverson, product name) and HOMOGENIZING MIXER MARK II series (manufactured by PRIMIX Corporation, product name).

When liquid components (a binder resin, a liquid medium, and the like) infiltrate into the pores present in the porous particles, the coating liquid specific gravity increases, and as a result, the density of the coating film becomes large. In order to suppress this, it is preferable to adjust the stirring conditions according to the characteristics of the porous particles used (stirring is not performed under excessive conditions), or to change the type of the binder resin (a binder resin that increases the viscosity of the liquid components and has low affinity to the porous particles is selected), during the preparation of the coating liquid. Shear stirring at a low speed by planetary movement using a planetary mixer is suitable for stirring porous particles, and the above-described problem is not likely to occur. Particularly, a coating liquid having more satisfactory dispersibility can be prepared while suppressing an increase in the coating liquid specific gravity, by performing stirring under the above-described stirring conditions and by using a homomixer and the like in combination.

The coating liquid comprises the above-mentioned porous particles, a binder resin, and a liquid medium. The coating liquid can be obtained by the above-described method for producing a coating liquid.

The binder resin has a function of binding the porous particles after formation of a coating film. Examples of the binder resin include an epoxy resin, a silicone resin, a phenolic resin, a urea resin, a melamine resin, a polyurethane resin, a polyethylene resin, a polypropylene resin, a polystyrene resin, a polyester resin, an acrylic resin, a polyvinyl chloride resin, a polyvinyl acetate resin, a polyamide resin, a polyimide resin, a cellulose-based resin, and a polyvinyl-based resin. Among these, from the viewpoints of heat resistance and toughness, a silicone resin, an acrylic resin, a phenolic resin, and a polyester resin can be suitably used.

Examples of the cellulose-based resin include hydroxypropylmethyl cellulose, carboxymethyl cellulose ammonium, and hydroxyethylmethyl cellulose. Furthermore, examples of the polyvinyl-based resin include polyvinyl alcohol and polyvinylpyrrolidone.

When the binder resin is a thermosetting resin, the coating liquid may further contain a curing agent. The curing agent is not particularly limited and may be appropriately changed depending on the type of the thermosetting resin. For example, when the thermosetting resin is an epoxy resin, any known epoxy resin curing agent can be used as the curing agent. Examples of the epoxy resin curing agent include an amine-based curing agent, an acid anhydride-based curing agent, and a polyamide-based curing agent, and from the viewpoint of reactivity, an amine-based curing agent and a polyamide-based curing agent can be suitably used.

Examples of the liquid medium include water and an organic solvent. The organic solvent is not particularly limited so long as the porous particles can be dispersed therein, and examples include aromatic hydrocarbons such as toluene, xylene, mesitylene, cumene, and p-cymene; aliphatic hydrocarbons such as hexane, heptane, and pentane; ethers such as diethyl ether, tetrahydrofuran, and 1,4-dioxane; alcohols such as methanol, ethanol, isopropanol (isopropyl alcohol), butanol, ethylene glycol, and propylene glycol; ketones such as acetone, methyl ethyl ketone, methyl isobutyl ketone, cyclohexanone, and 4-hydroxy-4-methyl-2-pentanone; esters such as methyl acetate, ethyl acetate, and butyl acetate; and amides such as N,N-dimethylformamide, N,N-dimethylacetamide, and N-methylpyrrolidone. Among these, from the viewpoints of volatility, the boiling point, and the like, alcohols and ketones can be used, and particularly, alcohols can be suitably used. Since alcohols and ketones are easily mixed with water, a water-based resin, and the like, alcohols and ketones are suitable also for the use in combination with those components.

The coating liquid may comprise a thickening agent, a fibrous material, a pigment, a leveling agent, and the like as other components.

A thickening agent can increase the viscosity of the coating liquid and can make the coatability on an object more satisfactory. Examples of the thickening agent include fine particles of fumed silica, clay minerals, and the like.

A fibrous material can exhibit a function of anchoring between the porous particles after formation of a coating film and can further increase the coating film strength. The fibrous material is not particularly limited, and examples include organic fibers and inorganic fibers. Examples of the organic fibers include polyamide-based fibers, polyimide-based fibers, polyvinyl alcohol-based fibers, polyvinylidene chloride-based fibers, polyvinyl chloride-based fibers, polyester-based fibers, polyacrylonitrile-based fibers, polyethylene-based fibers, polypropylene-based fibers, polyurethane-based fibers, phenolic fibers, polyether ester-based fibers, polylactic acid-based fibers, and polycarbonate-based fibers. Examples of the inorganic fibers include glass fibers, carbon fibers, ceramic fibers, and metal fibers.

In the coating liquid of the present embodiment, a large quantity of porous particles are contained as compared to conventional cases, and the content of the porous particles in the coating liquid is 20% by mass or more. From the viewpoint of obtaining a coating film having a lower density, this content can be adjusted to 25% by mass or more, and the content may be 30% by mass or more or may be further more than 30% by mass. The upper limit of the content is not particularly limited; however, from the viewpoints of dispersibility of the porous particles, satisfactory coatability, and the like, the upper limit can be set to 50% by mass.

The content of the binder resin in the coating liquid can be adjusted to 1% by mass or more, may be 2% by mass or more, or may be 3% by mass or more, from the viewpoints of the bindability between porous particles, thermal insulation properties of the coating film, and the like. Furthermore, this content can be adjusted to 10% by mass or less; however, the content may be 7% by mass or less, or may be 5% by mass or less.

The content of the binder resin in the coating liquid can be adjusted to, for example, 5 parts by mass or more with respect to 100 parts by mass of the porous particles; however, the content may be 7 parts by mass or more, may be 10 parts by mass or more, or may be 12 parts by mass or more. Thereby, it becomes easy for the porous particles to be strongly bound by the binder resin, and the strength of the coating film is further increased.

Furthermore, the content of the binder resin can be adjusted to 20 parts by mass or less with respect to 100 parts by mass or the porous particles; however, the content may be 18 parts by mass or less or may be 15 parts by mass or less. Thereby, the proportion of the porous particles in the coating film becomes high, the coating film density can be decreased, and the thermal insulation properties of the coating film are further improved.

The content of the fibrous material in the coating liquid can be adjusted to 0.01% to 30% by mass from the viewpoints of the dispersibility in the coating liquid, the development of a satisfactory anchoring function, and the like; however, the content may also be 0.1% to 10% by mass.

The content of the fibrous material in the coating liquid can be adjusted to, for example, 5 parts by mass or more with respect to 100 parts by mass of the porous particles; however, the content may be 7 parts by mass or more or may be 9 parts by mass or more. Thereby, an anchoring effect caused by the fibrous material is easily obtained, and the coating film strength is further increased.

Furthermore, the content of the fibrous material can be adjusted to, for example, 50 parts by mass or less with respect to 100 parts by mass of the porous particles; however, the content may be 35 parts by mass or less, may be 25 parts by mass or less, may be 20 parts by mass or less, or may be 15 parts by mass or less. Thereby, the proportion of the porous particles in the coating film becomes high, and the thermal insulation properties of the coating film are further enhanced.

The content of the thickening agent can be appropriately adjusted so as to obtain a desired coating liquid viscosity (for example, 1000 mPa·s or more). Since the viscosity of the coating liquid can also be increased by incorporating a binder resin therein, in that case, it is not necessarily essential to incorporate a thickening agent.

The proportion of the porous particles with respect to the total solid content in the coating liquid can be adjusted to 90% by volume or more; however, the proportion may be 95% by volume or more or may be 98% by volume or more. Furthermore, the proportion of the binder resin with respect to the total solid content in the coating liquid can be adjusted to 3% by volume or less; however, the proportion may be 2.5% by volume or less or may be 2% by volume or less.

The liquid medium may comprise water as a main component (for example, 90% by mass or more). Since water does not easily infiltrate into the porous structure of water-repellent porous particles, coating liquid formation is more easily achieved. However, the liquid medium may comprise an organic solvent in order to further enhance the kneadability of the porous particles and the binder resin. The content of the organic solvent in the liquid medium can be adjusted to 1% by mass or more, and the content may be 3% by mass or more or may be 5% by mass or more.

The specific gravity of the coating liquid can be adjusted to 0.8 or less; however, the specific gravity may be 0.77 or less or may be 0.75 or less. The lower limit of the specific gravity can be adjusted to 0.35 from the viewpoint that a coating film is easily formed while the generation of cracks is suppressed, and the lower limit may also be 0.6. The specific gravity of the coating liquid can be measured using a disposable syringe in an environment at room temperature (10°C to 30°C). Specifically, a 2.5-mL disposable syringe is filled with 1.5 mL or more of the coating liquid, air inside the syringe is extracted, and then the total weight (A) of the syringe and the coating liquid is measured. Subsequently, the total weight (B) of the syringe and the coating liquid in the syringe after pushing out 1.0 mL of the coating liquid from the syringe is measured. Then, the weight difference of (A) - (B) can be calculated as the specific gravity of the coating liquid as the weight per 1.0 mL of the coating liquid. However, the specific gravity of the coating liquid can also be measured using a laser volumeter, a buoy, a specific gravity meter, or the like in addition to the above-described method of using a syringe.

The coating liquid according to the present embodiment may be referred to as a porous particle-containing coating liquid; however, the coating liquid may also be in a paste form depending on the viscosity and may be referred to as a porous particle-containing paste.

### <Method for producing coating film and Coating film>

The coating film can be formed by removing a liquid medium from the above-described coating liquid comprising porous particles, a binder resin, and a liquid medium. More specifically, the method for producing a coating film (coating film forming method) can include a step of applying the above-mentioned coating liquid on an object, and a step of removing the liquid medium from the coating liquid applied on the object.

The method of applying the coating liquid on an object is not particularly limited, and examples include dip coating, spray coating, spin coating, and roll coating. In forming a coating film, the liquid medium may be removed from the coating liquid by subjecting the applied coating liquid to a heating (for example, 40°C to 150°C) treatment, a pressure reduction (for example, 10000 Pa or less) treatment, or both of those treatments.

A coating film comprising porous particles and a binder resin can be obtained by the above-described step.

The content of the porous particles in the coating film can be adjusted to, for example, 80% by mass or more; however, the content may be 85% by mass or more or may be 90% by mass or more. Thereby, the coating film density is decreased, and the thermal insulation properties of the coating film are further enhanced. The content of the porous particles in the coating film can be adjusted to, for example, 95% by mass or less; however, the content may also be 93% by mass or less. Thereby, there is a tendency that a coating film is easily formed.

The proportion of the porous particles in the coating film can be adjusted to 90% by volume or more; however, the proportion may be adjusted to 95% by volume or more or may be 98% by volume or more. Furthermore, the proportion of the binder resin in the coating film can be adjusted to 3% by volume or less; however, the proportion may be 2.5% by volume or less or may be 2% by volume or less.

A very light coating film (porous coating film) can be obtained by using the coating liquid of the present embodiment. The density of the coating film can be adjusted to 0.4 g/cm³ or less; however, the density may be 0.37 g/cm³ or less or may be 0.35 g/cm³ or less. The lower limit of the density of the coating film is not particularly limited; however, from the viewpoint of easily obtaining satisfactory coating film strength, the lower limit can be adjusted to 0.1 g/cm³ or may be adjusted to 0.2 g/cm³. The density of the coating film can be measured by the "Method of measuring density and specific gravity according to a weighing-in-liquid method" or the "Method of measuring density and specific gravity by geometric measurement" as described in JIS Z 8827:2012.

The thickness of the coating film is not particularly limited and can be adjusted to, for example, 0.01 to 5 mm.

The material that constitutes the object is not particularly limited, and examples include metals, ceramics, glass, resins, and composite materials of these. The form of the object can be appropriately selected according to the purpose of use or the material, and examples include a block form, a sheet form, a powder form, and a fiber form.

The coating film has various characteristics (for example, excellent thermal insulation properties, heat resistance, and flame retardancy) depending on the type of the porous particles. From such advantages, this coating film can be applied to the use application as a thermal insulation material or the like for cryogenic containers, aerospace field, construction field, automobile field, electric appliance field, semiconductor field, industrial facilities, and the like. This coating film can also be utilized as a water-repellent material, a sound-absorbing material, a seiche material, a catalyst support material, or the like in addition to the use application as a thermal insulation material.

### Examples

Next, the present invention will be described in more detail by way of the following Examples; however, these Examples are not intended to be limit the present invention.

### (Production of porous particles A)

100.0 parts by mass of PL-2L (manufactured by FUSO CHEMICAL CO., LTD., product name) as a silica particle-containing raw material, 80.0 parts by mass of water, 0.5 parts by mass of acetic acid as an acid catalyst, 1.0 part by mass of cetyltrimethylammonium bromide (manufactured by Wako Pure Chemical Industries, Ltd.) as a cationic surfactant, and 150.0 parts by mass of urea as a thermal hydrolysable compound were mixed. To this, 60.0 parts by mass of methyltrimethoxysilane (manufactured by Shin-Etsu Chemical Co., Ltd., product name: KBM-13), 20.0 parts by mass of dimethyldimethoxysilane (manufactured by Shin-Etsu Chemical Co., Ltd., product name: KBM-22), and 20.0 parts by mass of a both terminal bifunctional alkoxy-modified polysiloxane compound having a structure represented by the above-described General Formula (B) (hereinafter, referred to as "polysiloxane compound X") as silicon compounds were added, and the mixture was caused to react for 2 hours at 25°C to obtain a sol. The sol thus obtained was gelated at 60°C and then aged for 48 hours at 60°C, and thus a wet gel was obtained.

The "polysiloxane compound X" was synthesized as follows. First, in a 1-liter three-necked flask equipped with a stirrer, a thermometer, and a Dimroth condenser tube, 100.0 parts by mass of dimethylpolysiloxane having a silanol group at both ends, XC96-723 (manufactured by Momentive Performance Materials Japan LLC, product name), 181.3 parts by mass of methyltrimethoxysilane, and 0.50 parts by mass of t-butylamine were mixed, and the mixture was caused to react for 5 hours at 30°C. Subsequently, this reaction liquid was heated for 2 hours at 140°C under a reduced pressure of 1.3 kPa to remove volatile matter, and thereby a both terminal-bifunctional alkoxy-modified polysiloxane compound (polysiloxane compound X) was obtained.

Subsequently, the wet gel thus obtained was transferred into a plastic bottle, the bottle was tightly sealed, and then the wet gel was pulverized for 10 minutes at 27000 rpm using an Extreme Mill (manufactured by AS ONE Corporation, MX-1000XTS). Thus, a particulate wet gel was obtained. The particulate wet gel thus obtained was immersed in 2500.0 parts by mass of methanol and washed for 24 hours at 25°C. This washing operation was carried out three times in total by exchanging the methanol with fresh methanol. Subsequently, the washed particulate wet gel was immersed in 2500.0 parts by mass of heptane, which is a solvent having low surface tension, and was subjected to solvent replacement for 24 hours at 25°C. This solvent replacement operation was carried out three times in total by exchanging the heptane with fresh heptane. The particulate wet gel that had been subjected to washing and solvent replacement was dried for 96 hours at 40°C at normal pressure and then was further dried for 2 hours at 150°C. Finally, the dried gel was applied to a sieve (manufactured by TOKYO SCREEN CO., LTD., sieve opening 45 µm, wire diameter 32 µm), and porous particles A (aerogel particles A) having structures represented by the above-described General Formulae (3), (4), and (5) were obtained.

### (Preparation of porous particles B)

As the porous particles B (aerogel particles B), JIOS AeroVa (registered trademark, manufactured by JIOS Aerogel Corporation, product name) was prepared.

### (Measurement of specific surface area of porous particles)

The BET specific surface area of the porous particles was measured using a gas adsorption amount measuring apparatus (manufactured by Quantachrome Instruments Japan G.K., autosorb-iQ (autosorb is a registered trademark)). The specific surface area of the porous particles A was 125 m²/g, and the specific surface area of the porous particles B was 716 m²/g.

### (Measurement of average particle size of porous particles)

A dispersion liquid was prepared by adding porous particles to ethanol such that the content of the porous particles would be 0.5% by mass, and applying vibration to this for 20 minutes with a 50-W ultrasonic homogenizer. 10 mL of the dispersion liquid thus obtained was injected into Microtrac MT3000 (manufactured by Nikkiso Co., Ltd., product name), and the particle size was measured at 25°C at a refractive index of 1.3 and an absorption of 0. Then, the particle size at a cumulative value of 50% (based on volume) in the particle size distribution thus obtained was designated as average particle size D50. The average particle size D50 of the porous particles A was 20 µm, and the average particle size D50 of the porous particles B was 17 µm.

### (Example 1)

In a 100-mL POLYCUP, 5.00 g of MAPOLOSE MP30000 (manufactured by Matsumoto Yushi-Seiyaku Co., Ltd., product name, specific gravity 1.2) as hydroxypropylmethyl cellulose and 10 g of isopropyl alcohol were introduced, and a dispersion liquid of MP30000 was prepared by stirring the content with a dispensing spoon. Next, 100 g of pure water was introduced into a 500-mL POLYCUP, and the entire amount of the above-described dispersion liquid was added to the pure water while the pure water was stirred at 2000 rpm by a Homomixer L5R (manufactured by Silverson, product name). The stirring time was set to 3 minutes. Thereby, a base liquid was prepared.

Next, the entire amount of the base liquid was introduced into a receiving vessel of HIVIS MIX Model 2P-03 (manufactured by PRIMIX Corporation, product name), and while the base liquid was stirred at 100 rpm, 50 g of the porous particles A were added thereto. The stirring time was set to 60 minutes. Thereby, a coating liquid of Example 1 was obtained.

### (Other Examples and Comparative Examples)

Coating liquids were prepared in the same manner as in Example 1, except that the blending raw materials and the stirring method for the coating liquids were changed as shown in Table 1 or 2. In Comparative Example 2, the blending raw materials of the coating liquid were introduced into a vessel for exclusive use of AWATORI RENTARO ARV-310 (manufactured by THINKY CORPORATION, product name), and a coating liquid was obtained by stirring the raw materials for 20 minutes at a stirring rate of 2000 rpm.

**[Table 1]**

| | | | | Example 1 | Example 2 |
|---|---|---|---|---|---|
| Blend | Porous particles | Type | | A | B |
| | | Content | g | 50.00 | 37.50 |
| | | | mL | 250 | 187.5 |
| | Binder resin | Type | | MP30000 | MP30000 |
| | | Content | g | 5.00 | 5.00 |
| | | | mL | 4.17 | 4.17 |
| | Liquid medium | Type 1 | | IPA | IPA |
| | | Content | g | 10 | 10 |
| | | | mL | 12.8 | 12.8 |
| | | Type 2 | | Water | Water |
| | | Content | g | 100 | 100 |
| Stirring method | | Stirring means 1 | | A | A |
| | | Stirring rate | rpm | 2000 | 2000 |
| | | Stirring time | min | 3 | 3 |
| | | Stirring means 2 | | B | B |
| | | Stirring rate | rpm | 100 | 100 |
| | | Stirring time | min | 60 | 60 |

**[Table 2]**

| | | | | Comparative Example 1 | Comparative Example 2 |
|---|---|---|---|---|---|
| Blend | Porous particles | Type | | A | A |
| | | Content | g | 50.00 | 5.00 |
| | | | mL | 250 | 25 |
| | Binder resin | Type | | MP30000 | MP30000 |
| | | Content | g | 5.00 | 0.50 |
| | | | mL | 4.17 | 0.42 |
| | Liquid medium | Type 1 | | IPA | IPA |
| | | Content | g | 10 | 1 |
| | | | mL | 12.8 | 1.3 |
| | | Type 2 | | Water | Water |
| | | Content | g | 100 | 10 |
| Stirring method | | Stirring means 1 | | A | C |
| | | Stirring rate | rpm | 2000 | 2000 |
| | | Stirring time | min | 20 | 20 |
| | | Stirring means 2 | | - | - |
| | | Stirring rate | rpm | - | - |
| | | Stirring time | min | - | - |

In Tables 1 and 2, the details of the stirring means A to C were as follows.
A: Homomixer L5R (manufactured by Silverson, product name)
B: Planetary mixer HIVIS MIX 2P-03 (manufactured by PRIMIX Corporation, product name)
C: AWATORI RENTARO ARV-310 (manufactured by THINKY CORPORATION, product name, rotation and revolution type mixer)

### (Various evaluations)

The following evaluations were carried out for the coating liquids obtained in the various examples. The evaluation results are presented in Table 3.

### (Evaluation of coating liquid dispersibility)

A coating liquid obtained in each of the examples was introduced into a graduated cylinder-shaped, vertically long glass vessel, and the vessel was covered with a lid. The coating liquid was left to stand for 60 minutes in that state, and then the state of the coating liquid was visually observed. The evaluation criteria were as follows.

Satisfactory: The coating liquid was in the form of a white cloudy paste.

Defective: The liquid component and the porous particles were separated, and a supernatant was produced in an amount of 1% by volume or more with respect to the total amount of the coating liquid.

### (Measurement of coating liquid specific gravity)

The specific gravity of a coating liquid obtained in each of the examples was measured using a disposable syringe (manufactured by Terumo Corporation, volume 2.5 mL). Specifically, in an environment at room temperature (10°C to 30°C), a plunger was removed from the syringe, the syringe was filled with a coating liquid using a dispensing spoon so that air bubbles would not be incorporated into the coating liquid, the plunger was mounted again, and air bubbles at the syringe tip were extracted. The difference between the weight of the syringe as a whole containing the coating liquid and the weight after pushing out 1 mL of the coating liquid as measured with an electronic balance was designated as the weight per 1 mL of the coating liquid, and the specific gravity of the coating liquid was calculated.

### (Evaluation of film-forming properties)

A coating film was formed using a coating liquid obtained in each of the examples. Specifically, the coating liquid was applied on an aluminum foil so as to obtain a thickness of 2 mm, using a metal spatula. Then, the liquid medium was removed from the coating liquid by heating the applied coating liquid for 1 hour at 120°C, and a coating film was obtained. The coating film thus obtained was visually observed and was evaluated according to the following evaluation criteria.

Satisfactory: The coating film had a satisfactory external appearance without cracks.

Defective: Cracks were generated.

### (Measurement of coating film density)

The density of the coating film obtained by the above-described evaluation of film-forming properties was measured. Specifically, the coating film thus obtained was cut into a size of 3 cm × 3 cm to obtain a measurement sample, and the weight in air and the weight in water of the measurement sample were measured using a specific gravity meter (Alfa Mirage Co., Ltd., MDS-300) equipped with a water tank at a water temperature of 20°C to obtain the specific gravity of the coating film.

**[Table 3]**

| | | Example 1 | Example 2 | Comparative Example 1 | Comparative Example 2 |
|---|---|---|---|---|---|
| Coating liquid | Content of porous particles (mass%) | 30.3 | 24.6 | 30.3 | 30.3 |
| | Dispersibility | Satisfactory | Satisfactory | Defective | Satisfactory |
| | Specific gravity | 0.75 | 0.39 | - | 0.85 |
| | Film-forming properties | Satisfactory | Satisfactory | - | Satisfactory |
| Coating film | Content of porous particles (mass%) | 90.9 | 88.2 | - | 90.9 |
| | Density (g/cm³) | 0.36 | 0.13 | - | 0.50 |

## Claims

1. A method for producing a coating liquid, the method comprising a stirring step of stirring a raw material comprising porous particles, a binder resin, and a liquid medium using a planetary mixer at a stirring speed of 8 to 200 rpm and a stirring time of 1 to 120 minutes.

2. The production method according to claim 1, wherein the method further comprises a preliminary stirring step of stirring the raw material using a high-speed shear stirrer, prior to the stirring step.

3. The production method according to claim 1 or 2, wherein the liquid medium comprises water.

4. The production method according to claim 3, wherein the liquid medium further comprises an organic solvent.

5. The production method according to any one of claims 1 to 4, wherein the binder resin comprises at least one selected from the group consisting of an epoxy resin, a silicone resin, a phenolic resin, a urea resin, a melamine resin, a polyurethane resin, a polyethylene resin, a polypropylene resin, a polystyrene resin, a polyester resin, an acrylic resin, a polyvinyl chloride resin, a polyvinyl acetate resin, a polyamide resin, a polyimide resin, a cellulose-based resin, and a polyvinyl-based resin.

6. The production method according to any one of claims 1 to 5, wherein the porous particles are aerogel particles.

7. A coating liquid obtainable by the production method according to any one of claims 1 to 6.

8. A coating liquid comprising porous particles, a binder resin, and a liquid medium, wherein a content of the porous particles is 20% by mass or more, and wherein the coating liquid has a specific gravity of 0.8 or less, determined by the method disclosed in the description

9. The coating liquid according to claim 8, wherein the liquid medium comprises water.

10. The coating liquid according to claim 9, wherein the liquid medium further comprises an organic solvent.

11. The coating liquid according to any one of claims 8 to 10, wherein the binder resin comprises at least one selected from the group consisting of an epoxy resin, a silicone resin, a phenolic resin, a urea resin, a melamine resin, a polyurethane resin, a polyethylene resin, a polypropylene resin, a polystyrene resin, a polyester resin, an acrylic resin, a polyvinyl chloride resin, a polyvinyl acetate resin, a polyamide resin, a polyimide resin, a cellulose-based resin, and a polyvinyl-based resin.

12. A coating film comprising porous particles and a binder resin, wherein a content of the porous particles is 80% by mass or more, and the coating film has a density of 0.4 g/cm³ or less, determined by the method disclosed in the description

13. The coating film according to claim 12, wherein the binder resin comprises at least one selected from the group consisting of an epoxy resin, a silicone resin, a phenolic resin, a urea resin, a melamine resin, a polyurethane resin, a polyethylene resin, a polypropylene resin, a polystyrene resin, a polyester resin, an acrylic resin, a polyvinyl chloride resin, a polyvinyl acetate resin, a polyamide resin, a polyimide resin, a cellulose-based resin, and a polyvinyl-based resin.

## Patentansprüche

1. Verfahren zum Herstellen einer Beschichtungsflüssigkeit, das Verfahren umfassend einen Rührschritt des Rührens eines Rohmaterials, das poröse Teilchen, ein Bindemittelharz und ein flüssiges Medium umfasst, unter Verwendung eines Planetenmischers bei einer Rührgeschwindigkeit von 8 bis 200 U/min und einer Rührzeit von 1 bis 120 Minuten.

2. Herstellungsverfahren nach Anspruch 1, wobei das Verfahren weiter einen vorbereitenden Rührschritt umfasst, bei dem das Rohmaterial vor dem Rührschritt mit einem Hochgeschwindigkeits-Scherrührer gerührt wird.

3. Herstellungsverfahren nach Anspruch 1 oder 2, wobei das flüssige Medium Wasser umfasst.

4. Herstellungsverfahren nach Anspruch 3, wobei das flüssige Medium weiter ein organisches Lösungsmittel umfasst.

5. Herstellungsverfahren nach einem der Ansprüche 1 bis 4, wobei das Bindemittelharz mindestens eines, ausgewählt aus der Gruppe, bestehend aus einem Epoxidharz, einem Silikonharz, einem Phenolharz, einem Harnstoffharz, einem Melaminharz, einem Polyurethanharz, einem Polyethylenharz, einem Polypropylenharz, einem Polystyrolharz, einem Polyesterharz, einem Acrylharz, einem Polyvinylchloridharz, einem Polyvinylacetatharz, einem Polyamidharz, einem Polyimidharz, einem Harz auf Cellulosebasis und einem Harz auf Polyvinylbasis, umfasst.

6. Herstellungsverfahren nach einem der Ansprüche 1 bis 5, wobei die porösen Teilchen Aerogel-Teilchen sind.

7. Beschichtungsflüssigkeit, erhältlich durch das Herstellungsverfahren nach einem der Ansprüche 1 bis 6.

8. Beschichtungsflüssigkeit, umfassend poröse Teilchen, ein Bindemittelharz und ein flüssiges Medium, wobei ein Gehalt der porösen Teilchen 20 Massenprozent oder mehr beträgt und wobei die Beschichtungsflüssigkeit ein spezifisches Gewicht von 0,8 oder weniger, bestimmt durch das in der Beschreibung offenbarte Verfahren, aufweist.

9. Beschichtungsflüssigkeit nach Anspruch 8, wobei das flüssige Medium Wasser umfasst.

10. Beschichtungsflüssigkeit nach Anspruch 9, wobei das flüssige Medium weiter ein organisches Lösungsmittel umfasst.

11. Beschichtungsflüssigkeit nach einem der Ansprüche 8 bis 10, wobei das Bindemittelharz mindestens eines, ausgewählt aus der Gruppe, bestehend aus einem Epoxidharz, einem Silikonharz, einem Phenolharz, einem Harnstoffharz, einem Melaminharz, einem Polyurethanharz, einem Polyethylenharz, einem Polypropylenharz, einem Polystyrolharz, einem Polyesterharz, einem Acrylharz, einem Polyvinylchloridharz, einem Polyvinylacetatharz, einem Polyamidharz, einem Polyimidharz, einem Harz auf Cellulosebasis und einem Harz auf Polyvinylbasis, umfasst.

12. Beschichtungsfilm, umfassend poröse Teilchen und ein Bindemittelharz, wobei ein Gehalt der porösen Teilchen 80 Massenprozent oder mehr beträgt und der Beschichtungsfilm eine Dichte von 0,4 g/cm³ oder weniger, bestimmt durch das in der Beschreibung offenbarte Verfahren, aufweist.

13. Beschichtungsfilm nach Anspruch 12, wobei das Bindemittelharz mindestens eines, ausgewählt aus der Gruppe, bestehend aus einem Epoxidharz, einem Silikonharz, einem Phenolharz, einem Harnstoff harz, einem Melaminharz, einem Polyurethanharz, einem Polyethylenharz, einem Polypropylenharz, einem Polystyrolharz, einem Polyesterharz, einem Acrylharz, einem Polyvinylchloridharz, einem Polyvinylacetatharz, einem Polyamidharz, einem Polyimidharz, einem Harz auf Cellulosebasis und einem Harz auf Polyvinylbasis, umfasst.

## Revendications

1. Un procédé de production d'un liquide de revêtement, le procédé comprenant une étape d'agitation d'une matière première comprenant des particules poreuses, une résine liante et un milieu liquide à l'aide d'un mélangeur planétaire à une vitesse d'agitation de 8 à 200 tr/min et une durée d'agitation de 1 à 120 minutes.

2. Le procédé de production selon la revendication 1, dans lequel le procédé comprend en outre une étape préliminaire d'agitation de la matière première à l'aide d'un agitateur à cisaillement à grande vitesse, avant l'étape d'agitation.

3. Le procédé de production selon la revendication 1 ou 2, dans lequel le milieu liquide comprend de l'eau.

4. Le procédé de production selon la revendication 3, dans lequel le milieu liquide comprend en outre un solvant organique.

5. Le procédé de production selon l'une quelconque des revendications 1 à 4, dans lequel la résine liante comprend au moins une résine choisie dans le groupe constitué d'une résine époxy, d'une résine silicone, d'une résine phénolique, d'une résine urée, d'une résine mélamine, d'une résine polyuréthane, d'une résine polyéthylène, d'une résine polypropylène, d'une résine polystyrène, d'une résine polyester, d'une résine acrylique, d'une résine de chlorure de polyvinyle, d'une résine d'acétate de polyvinyle, d'une résine polyamide, d'une résine polyimide, d'une résine à base de cellulose, et d'une résine à base de polyvinyle.

6. Le procédé de production selon l'une des revendications 1 à 5, dans lequel les particules poreuses sont des particules d'aérogel.

7. Un liquide de revêtement pouvant être obtenu par le procédé de production selon l'une quelconque des revendications 1 à 6.

8. Un liquide de revêtement comprenant des particules poreuses, une résine liante et un milieu liquide, dans lequel une teneur en particules poreuses est de 20% en masse ou plus, et dans lequel le liquide de revêtement a une gravité spécifique de 0,8 ou moins, déterminée par le procédé divulgué dans la description.

9. Le liquide de revêtement selon la revendication 8, dans lequel le milieu liquide comprend de l'eau.

10. Le liquide de revêtement selon la revendication 9, dans lequel le milieu liquide comprend en outre un solvant organique.

11. Le liquide de revêtement selon l'une quelconque des revendications 8 à 10, dans lequel la résine liante comprend au moins une résine choisie dans le groupe constitué d'une résine époxy, d'une résine silicone, d'une résine phénolique, d'une résine urée, d'une résine mélamine, d'une résine polyuréthane, d'une résine polyéthylène, d'une résine polypropylène, d'une résine polystyrène, d'une résine polyester, d'une résine acrylique, d'une résine de chlorure de polyvinyle, d'une résine d'acétate de polyvinyle, d'une résine polyamide, d'une résine polyimide, d'une résine à base de cellulose, et d'une résine à base de polyvinyle.

12. Un film de revêtement comprenant des particules poreuses et une résine liante, dans lequel une teneur en particules poreuses est de 80% en masse ou plus, et le film de revêtement a une densité de 0,4 g/cm³ ou moins déterminée par le procédé divulgué dans la description

13. Le film de revêtement selon la revendication 12, dans lequel la résine liante comprend au moins une résine choisie dans le groupe constitué d'une résine époxy, d'une résine silicone, d'une résine phénolique, d'une résine urée, d'une résine mélamine, d'une résine polyuréthane, d'une résine polyéthylène, d'une résine polypropylène, d'une résine polystyrène, d'une résine polyester, d'une résine acrylique, d'une résine de chlorure de polyvinyle, d'une résine d'acétate de polyvinyle, d'une résine polyamide, d'une résine polyimide, d'une résine à base de cellulose, et d'une résine à base de polyvinyle.
